# FASCICULE DE BREVET EUROPEEN

(11) **EP 3 141 462 B1**
(45) Date de publication et mention de la délivrance du brevet: **25.07.2018**
(21) Numéro de dépôt: 16183610.1
(22) Date de dépôt: 10.08.2016
(51) Int. Cl.: B62D 25/20

(54) **STRUCTURE DE VEHICULE COMPORTENT UN RENFORT DE PLANCHE A TALON ET VEHICULE COMPORTANT UNE TELLE STRUCTURE**
FAHRZEUGSTRUKTUR, DIE EINE UNTERBODENVERSTÄRKUNG UMFASST, UND FAHRZEUG, DAS EINE SOLCHE STRUKTUR UMFASST
VEHICLE STRUCTURE COMPRISING A FLOOR REINFORCEMENT WITH A HEEL AND VEHICLE COMPRISING SUCH A STRUCTURE

(30) Priorité: 11.09.2015 FR 1558464
(43) Date de publication de la demande: 15.03.2017
(73) Titulaire: PSA Automobiles SA, 78300 Poissy (FR)
(72) Inventeur: JAUMONT, Patrick, 94400 VITRY SUR SEINE (FR); PORET, Jean Yves, 92210 SAINT-CLOUD (FR)

(56) Documents cités:
- EP-A2- 2 390 164
- DE-A1-102010 049 427
- JP-A- 2014 162 468
- JP-A- 2015 155 224
- US-A- 5 641 194

## Description

L'invention concerne une structure de véhicule qui comporte une planche à talon et une pièce de renfort qui forme une doublure d'au moins une partie de la planche à talon. Elle concerne aussi un véhicule qui comporte une structure comportant une telle pièce de renfort.

Généralement, les véhicules comportent un plancher avant et un plancher d'assise, le plancher d'assise étant surélevé par rapport au plancher avant du véhicule et forme un support pour l'assise des passagers arrières du véhicule. Le plancher d'assise est relié au plancher avant par une planche à talon, sensiblement verticale et s'étendant sur toute la largeur de l'habitacle du véhicule. La planche à talon est fixée par ses bords latéraux aux longerons du véhicule, par son bord inférieur au plancher avant et par son bord supérieur au plancher d'assise. Le plancher avant comporte une partie relevée, qui forme un tunnel, qui se prolonge jusqu'à la planche à talon. La planche à talon comportant une partie de plus faible hauteur, qui présente une forme complémentaire au tunnel. En cas de choc latéral, une partie des efforts transitent par la planche à talon. L'évolution des réglementations impose que les véhicules résistent à des chocs latéraux de plus en plus sévères. Afin d'augmenter la capacité de la planche à talon à faire passer des efforts et pour limiter les déformations de ladite planche à talon, notamment le flambage ainsi que des torsions suivant l'axe transversal du véhicule, il est connu de placer une pièce de renfort qui s'étend sur toute la largeur de la planche à talon. Cette pièce de renfort s'étend généralement d'un longeron à l'autre, en formant, entre autre, une doublure de la partie de plus faible hauteur.

La figure 1 montre un plancher de véhicule tel que divulgué dans le document US5641194 qui comporte une telle planche à talon 1, reliée par son bord inférieur au plancher avant 2, par son bord supérieur au plancher d'assise 3 et par ces bords latéraux aux longerons 4. Un profilé 5 est fixé derrière la planche à talon 1, sur la face de la planche à talon 1 orientée vers l'extérieur de l'habitacle du véhicule, dite aussi face arrière et qui forme un corps creux 6 qui s'étend sur toute la largeur de la planche à talon 1. Une partie relevée 7 du plancher avant 2 forme un tunnel qui se prolonge jusqu'à la planche à talon 1. La planche à talon 1, qui présente une forme complémentaire au tunnel 7, présente une partie de plus faible hauteur 8 qui présente une moindre résistance en cas de choc latéral. Le profilé 5, en s'étendant sur toute la longueur de la planche à talon 1, renforce la planche à talon 1 et en particulier la partie de plus faible hauteur 8. Mais un tel profilé 5 crée un volume sur toute la largeur de la planche à talon 1, diminuant le volume disponible sous la plancher d'assise 3, dans lequel est généralement installé un réservoir à carburant. Un tel profilé 5, de par sa longueur importante, alourdi aussi la structure du véhicule.

La présente invention a pour but d'avoir une structure qui comporte une planche à talon renforcée pour répondre aux normes et règlementations concernant le choc latéral. Cette invention limite l'augmentation de la masse de la structure du véhicule, tout en limitant l'augmentation du volume occupé par le renfort de la planche à talon sous le plancher d'assise.

La présente invention concerne une structure de véhicule qui comporte un plancher d'assise, un plancher avant positionné plus bas que le plancher d'assise et une planche à talon qui est reliée par son bord supérieur au plancher d'assise, par son bord inférieur au plancher avant. Le plancher avant comporte une partie relevée, qui forme un tunnel, qui est reliée à la planche à talon. La planche à talon comporte une partie de plus faible hauteur de forme complémentaire à la partie relevée du plancher avant. La structure du véhicule comportant aussi une pièce de renfort qui forme une doublure d'au moins une partie de la planche à talon, telle que ladite pièce de renfort s'étend essentiellement le long de la partie de plus faible hauteur de la planche à talon. La partie de plus faible hauteur de la planche à talon constitue la partie la plus susceptible de se déformer lors d'un choc latéral sur le véhicule, au niveau de la planche à talon, faisant qu'un tel renfort uniquement positionné à cette endroit, renforce la planche à talon sans trop alourdir la structure du véhicule.

Selon une première caractéristique de l'invention, la pièce de renfort s'étend, suivant l'axe transversal du véhicule, sur une longueur inférieure à 20cm de part et d'autre de la partie de plus faible hauteur de la planche à talon. Le but du dimensionnement d'une telle pièce de renfort est d'avoir des zones de jonction par points de soudures avec la planche à talon qui soient positionnées de chaque côté de la partie de plus faible hauteur de la planche à talon, sans pour autant trop s'étendre pour ne pas alourdir inutilement la structure du véhicule. Une telle zone de jonction doit donc s'étendre sur au plus 10 à 20cm de part et d'autre de la partie de plus faible hauteur de la planche à talon.

Selon une deuxième caractéristique de l'invention, la structure du véhicule comporte deux longerons qui bordent latéralement le plancher avant, ladite planche à talon étant reliée, par ces bords latéraux, aux deux longerons latéraux. La planche à talon comporte au moins une nervure qui s'étend entre la partie de plus faible hauteur et un des bords latéraux de ladite planche à talon. Préférentiellement, la planche à talon comporte deux nervures, chaque nervure s'étendant entre un des deux côtés latéraux de la partie de plus faible hauteur et le bord latéral correspondant. La pièce de renfort est positionnée entre les deux nervures de la planche à talon. La pièce de renfort et les deux nervures forment un élément de renfort continu se prolongeant du premier bord latéral de la planche à talon vers le second bord latéral.

Selon une troisième caractéristique de l'invention et selon un mode de réalisation particulier, suivant l'axe transversal du véhicule, la pièce de renfort est positionnée dans la partie centrale de la planche à talon. La pièce de renfort est solidarisée au moyen de points de soudures sur la face arrière de la planche à talon.

L'invention porte aussi sur un véhicule comportant une structure telle que décrite précédemment.

L'invention sera mieux comprise à la lecture de la description qui va suivre, donnée uniquement à titre d'exemple et faite en se référant aux dessins annexés, sur lesquels :
- La figure 1, déjà décrite, représente une vue partielle en perspective, de la structure d'un véhicule comportant une pièce de renfort d'une planche à talon selon l'état de la technique ;
- La figure 2 représente est une vue arrière d'une planche à talon comportant une pièce de renfort suivant l'invention; et
- La figure 3 représente est une vue avant de la planche à talon selon l'invention.

Les termes avant, arrière, haut, bas, latéral, sont définis par rapport au véhicule lorsque la planche à talon est installée dans le véhicule. De même, les directions transversale et longitudinale correspondent aux directions transversale et longitudinale du véhicule lorsque la planche à talon est fixée sur le véhicule.

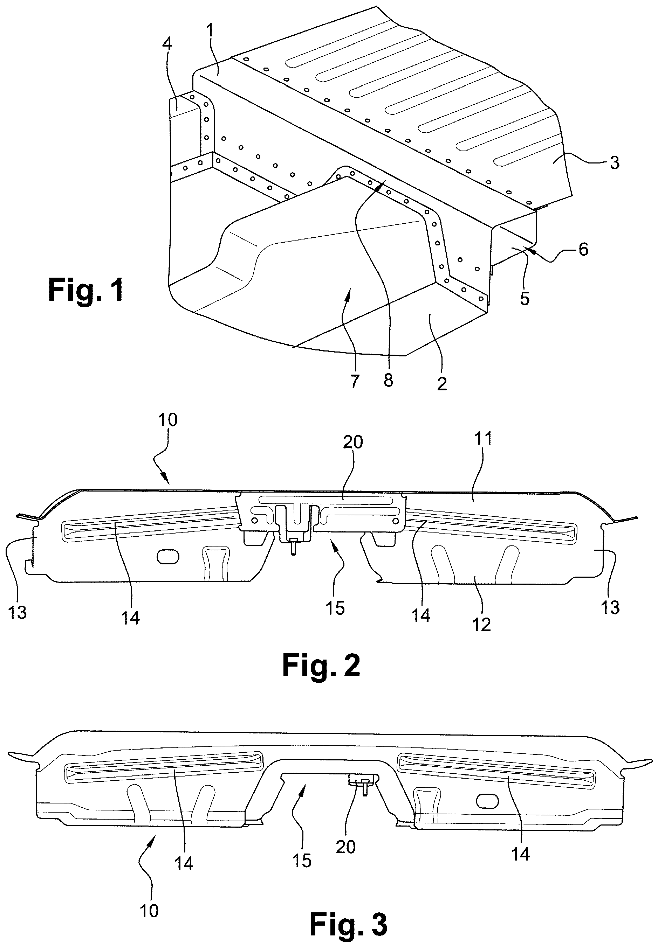

La figure 2 représente une vue arrière d'une planche à talon 10 selon l'invention. La planche à talon 10 comporte un bord supérieur 11 destiné à être solidarisé à un plancher d'assise, un bord inférieur 12 destiné à être solidarisé à un plancher avant et des bords latéraux 13 qui sont destinés à être reliés à deux longerons qui bordent latéralement le plancher avant. Le plancher avant comportant une partie relevée, qui forme un tunnel, qui est reliée à la planche à talon 10. La planche à talon 10 comportant une partie de plus faible hauteur 14 de forme complémentaire à la partie relevée du plancher avant. La planche à talon 10 comporte une pièce de renfort 20. La pièce de renfort 20 forme une doublure de la partie arrière de la planche à talon 10 et s'étend essentiellement au voisinage immédiat et le long de la partie de plus faible hauteur 14 de la planche à talon 10. La pièce de renfort 20 est prolongée de chaque côté, le long de la planche à talon 10, par des nervures 15. Chaque nervure 15 est formée par un embouti se prolongeant le long d'un des deux côtés de la planche à talon 10, entre un bord de la partie de plus faible hauteur 14 de la planche à talon 10 et le bord latéral 13 correspondant. Les deux extrémités latérales de la pièce de renfort 20 recouvrent en partie une extrémité chacune des deux nervures 15. Des points de soudures sont formés le long de ces zones de recouvrement pour solidariser le renfort 20 à la planche à talon 10. La pièce de renfort 20 et les deux nervures 15 forment ainsi un renfort continu qui se prolonge d'un premier bord latéral 13 de la planche à talon 10 vers le second bord latéral 13.

La figure 3 représente est une vue avant de la planche à talon selon l'invention. Dans cette figure est plus particulièrement visible la forme des deux nervures 15. Les deux nervures 15 se prolongent le long de la planche à talon 10, de part et d'autre de la partie de plus faible hauteur 14. Un tel embouti qui se prolongerait dans la partie de plus faible hauteur 14 de la planche à talon 10, ne pourrait pas remplir correctement son rôle de rigidification et serait techniquement difficilement réalisable du fait de la faible hauteur de matière disponible le long de cette partie de la planche à talon 10. Une telle planche à talon 10 est généralement réalisée en tôle, par un procédé d'emboutissage. La pièce de renfort 20 est aussi réalisée en tôle, par un procédé d'emboutissage. La pièce de renfort 20 est généralement soudée sur la face arrière de la planche à talon 10. Les deux nervures 15 et la pièce de renfort 20 sont dans un même prolongement afin de créer un renfort continu sur toute la longueur de la planche à talon 10.

Bien entendu, la forme de la planche à talon n'est présentée qu'à titre d'exemple de mode de réalisation et peut être modifiée sans pour autant sortir du cadre de l'invention. Notamment dans la forme des nervures qui se prolongent de part et d'autre de la partie de plus faible hauteur de la planche à talon. La partie relevée du plancher avant est présentée centrée par rapport à l'axe transversal du véhicule, mais peut tout aussi bien être excentrée sans pour autant sortir du cadre de l'invention.

## Revendications

1. Structure de véhicule comportant un plancher d'assise (3), un plancher avant (2) positionné plus bas que le plancher d'assise (3) et une planche à talon (10) qui est reliée par son bord supérieur (11) au plancher d'assise (3), par son bord inférieur (12) au plancher avant (2), le plancher avant (2) comportant une partie relevée (6), qui forme un tunnel, qui est reliée à la planche à talon (10), ladite planche à talon (10) comportant une partie de plus faible hauteur (15) de forme complémentaire à ladite partie relevée, ladite structure du véhicule comportant aussi une pièce de renfort (20) qui forme une doublure d'au moins une partie (15) de la planche à talon (10), **caractérisée en ce que** ladite pièce de renfort (20) s'étend essentiellement le long de la partie de plus faible hauteur (15) de la planche à talon (10).

2. Structure de véhicule selon la revendication 1, **caractérisée en ce que** la pièce de renfort (20) s'étend, suivant l'axe transversal du véhicule, sur une longueur inférieure à 20 cm de part et d'autre de la partie de plus faible hauteur (15) de la planche à talon (10).

3. Structure de véhicule selon la revendication 1 ou 2, **caractérisée en ce que** la structure du véhicule comporte deux longerons (4) qui bordent latéralement le plancher avant (2), ladite planche à talon (10) étant reliée, par ces bords latéraux (13), aux deux longerons latéraux (4).

4. Structure de véhicule selon la revendication 3, **caractérisée en ce que** la planche à talon (10) comporte au moins une nervure (14) qui s'étend entre la partie de plus faible hauteur (15) et un des bords latéraux (13) de ladite planche à talon (10).

5. Structure de véhicule selon la revendication 3 ou 4, **caractérisée en ce que** la planche à talon (10) comporte deux nervures (14), chaque nervure (14) s'étendant entre un des deux côtés latéraux de la partie de plus faible hauteur (15) et le bord latéral (13) correspondant.

6. Structure de véhicule selon la revendication 5, **caractérisée en ce que** la pièce de renfort (20) est positionnée entre les deux nervures (14) de la planche à talon (10).

7. Structure de véhicule selon la revendication 5 ou 6, **caractérisée en ce que** la pièce de renfort (20) et les deux nervures (14) forment un élément de renfort continu se prolongeant du premier bord latéral (13) de la planche à talon (10) vers le second bord latéral (13).

8. Structure de véhicule selon l'une quelconque des revendications précédentes, **caractérisée en ce que**, selon l'axe transversal du véhicule, la pièce de renfort (20) est positionnée dans la partie centrale de la planche à talon (10).

9. Structure de véhicule selon l'une quelconque des revendications précédentes, **caractérisée en ce que** la pièce de renfort (20) est solidarisée sur la face arrière de la planche à talon (10).

10. Véhicule comportant une structure suivant l'une quelconque des revendications précédentes.

## Patentansprüche

1. Fahrzeugstruktur, die ein Sitzbodenblech (3), ein vorderes Bodenblech (2), das niedriger als das Sitzbodenblech (3) angeordnet ist, und eine Auflagebrücke (10), die durch ihren oberen Rand (11) mit dem Sitzbodenblech (3), durch ihren unteren Rand (12) mit dem vorderen Bodenblech (2) verbunden ist, umfasst, wobei das vordere Bodenblech (2) einen erhöhten Abschnitt (6) umfasst, der einen Tunnel bildet, der mit der Auflagebrücke (10) verbunden ist, die Auflagebrücke (10) einen Abschnitt mit einer geringeren Höhe (15) mit einer zu dem erhöhten Abschnitt komplementären Form umfasst, wobei die Fahrzeugstruktur auch ein Verstrebungsteil (20) umfasst, das eine Auskleidung von mindestens einem Abschnitt (15) der Auflagebrücke (10) bildet, **dadurch gekennzeichnet, dass** sich das Verstrebungsteil (20) im Wesentlichen entlang des Abschnitts mit der geringeren Höhe (15) der Auflagebrücke (10) erstreckt.

2. Fahrzeugstruktur nach Anspruch 1, **dadurch gekennzeichnet, dass** sich das Verstrebungsteil (20) entlang der Querachse des Fahrzeugs über eine Länge von weniger als 20 cm auf beiden Seiten des Abschnitts mit der geringeren Höhe (15) der Auflagebrücke (10) erstreckt.

3. Fahrzeugstruktur nach Anspruch 1 oder 2, **dadurch gekennzeichnet, dass** die Struktur des Fahrzeugs zwei Längsträger (4) umfasst, die das vordere Bodenblech (2) seitlich begrenzen, wobei die Auflagebrücke (10) durch diese Seitenkanten (13) mit den beiden seitlichen Längsträgern (4) verbunden ist.

4. Fahrzeugstruktur nach Anspruch 3, **dadurch gekennzeichnet, dass** die Auflagebrücke (10) mindestens eine Rippe (14) umfasst, die sich zwischen dem Abschnitt mit der geringeren Höhe (15) und einer der Seitenkanten (13) der Auflagebrücke (10) erstreckt.

5. Fahrzeugstruktur nach Anspruch 3 oder 4, **dadurch gekennzeichnet, dass** die Auflagebrücke (10) zwei Rippen (14) umfasst, wobei sich jede Rippe (14) zwischen einer der beiden Seitenflächen des Abschnitts mit der geringeren Höhe (15) und der entsprechenden Seitenkante (13) erstreckt.

6. Fahrzeugstruktur nach Anspruch 5, **dadurch gekennzeichnet, dass** das Verstrebungsteil (20) zwischen den beiden Rippen (14) der Auflagebrücke (10) angeordnet ist.

7. Fahrzeugstruktur nach Anspruch 5 oder 6, **dadurch gekennzeichnet, dass** das Verstrebungsteil (20) und die beiden Rippen (14) ein durchgehendes Verstärkungselement bilden, das sich von der ersten Seitenkante (13) der Auflagebrücke (10) bis zur zweiten Seitenkante (13) erstreckt.

8. Fahrzeugstruktur nach einem der vorstehenden Ansprüche, **dadurch gekennzeichnet, dass** das Verstrebungsteil (20) entlang der Querachse des Fahrzeugs im mittleren Abschnitt der Auflagebrücke (10) angeordnet ist.

9. Fahrzeugstruktur nach einem der vorstehenden Ansprüche, **dadurch gekennzeichnet, dass** das Verstrebungsteil (20) auf der Rückseite der Auflagebrücke (10) angebracht ist.

10. Fahrzeug, das eine Struktur nach einem der vorstehenden Ansprüche umfasst.

## Claims

1. Vehicle structure comprising a base floor (3), a front floor (2) positioned lower than the base floor (3) and a heel board (10) which is connected by the upper edge (11) thereof to the base floor (3), by the lower edge (12) thereof to the front floor (2), the front floor (2) comprising a raised part (6), which forms a tunnel, which is connected to the heel board (10), said heel board (10) comprising a lower-height part (15) of complimentary shape to said raised part, said vehicle structure also comprising a reinforcement part (20) which forms a lining of at least one part (15) of the heel board (10), **characterised in that** said reinforcement part (20) mainly extends along the lower-height part (15) of the heel board (10).

2. Vehicle structure according to claim 1, **characterised in that** the reinforcement part (20) extends, along the transverse axis of the vehicle, over a length shorter than 20 cm on either side of the lower-height part (15) of the heel board (10).

3. Vehicle structure according to claim 1 or 2, **characterised in that** the vehicle structure comprises two side rails (4) which laterally border the front floor (2), said heel board (10) being connected, by these side edges (13), to the side rails (4).

4. Vehicle structure according to claim 3, **characterised in that** the heel board (10) comprises at least one ridge (14) which extends between the lower-height part (15) and one of the side edges (13) of said heel board (10).

5. Vehicle structure according to claim 3 or 4, **characterised in that** the heel board (10) comprises two ridges (14), each ridge (14) extending between one of the two lateral sides of the lower-height part (15) and the corresponding side edge (13).

6. Vehicle structure according to claim 5, **characterised in that** the reinforcement part (20) is positioned between the two ridges (14) of the heel board (10).

7. Vehicle structure according to claim 5 or 6, **characterised in that** the reinforcement part (20) and the two ridges (14) form a continuous reinforcement element extending from the first side edge (13) of the heel board (10) towards the second side edge (13).

8. Vehicle structure according to any one of the preceding claims, **characterised in that**, along the transverse axis of the vehicle, the reinforcement part (20) is positioned in the central part of the heel board (10).

9. Vehicle structure according to any one of the preceding claims, **characterised in that** the reinforcement part (20) is connected on the rear face of the heel board (10).

10. Vehicle comprising a structure according to any one of the preceding claims.
